**(19)** Europäisches Patentamt

European Patent Office

Office européen des brevets

**(11)** **EP 1 143 657 B1**

**(12)** ## EUROPEAN PATENT SPECIFICATION

**(45)** Date of publication and mention
of the grant of the patent:
**12.01.2005 Bulletin 2005/02**

**(51)** Int Cl.⁷: $H04L\ 9/18$

**(21)** Application number: **01107753.4**

**(22)** Date of filing: **03.04.2001**

**(54)** **Stream enciphering method, deciphering method and cryptographic communication system**

Datenstromverschlüsselungsverfahren, Entschlüsselungsverfahren und kryptographisches
Kommunikationssystem

Procédé de chiffrage d'un flux de données, procédé de déchiffrage et système de communication
cryptographique

**(84)** Designated Contracting States:
**DE FR GB**

**(30)** Priority: **03.04.2000 JP 2000100909**

**(43)** Date of publication of application:
**10.10.2001 Bulletin 2001/41**

**(73)** Proprietor: **Yazaki Corporation**
**Minato-ku, Tokyo 108-0073 (JP)**

**(72)** Inventors:
• **Abe, Takahiro**
**Susono-shi, Shizuoka-ken 410-1194 (JP)**

• **Shono, Katsufusa**
**Yokohama-shi, Kanagawa-ken 241-0005 (JP)**

**(74)** Representative: **HOFFMANN - EITLE**
**Patent- und Rechtsanwälte**
**Arabellastrasse 4**
**81925 München (DE)**

**(56)** References cited:
**US-A- 5 060 265**      **US-A- 5 675 608**
**US-A- 6 014 445**      **US-A- 6 044 388**

**Description**

BACKGROUND OF THE INVENTION

1. Field of the Invention

The present invention relates to improvement of stream enciphering method for generating cryptographic code by performing an enciphering in which exclusive-OR operations between plaintext code which is a secrecy object and pseudo noise (PN) signal are carried out.

2. Description of the Related Art

Modern society is often called a highly information-oriented society. In this society, it is indispensable to strongly maintain secrecy in transmission and storage of information in order to establish really impartial, fair social system.

One of systems meeting such a demand is enciphering of information for ensuring secrecy in transmission and storage of information. Secrecy of information under analog encryption is high. However, technical handling of the analog encryption is very complicated and therefore, it has been hardly used for practical purpose. A method of enciphering digital file in digital manner is a current main stream accompanied by development of digital computer.

According to a generally well known stream enciphering method, which is one of such digital enciphering methods, the plaintext codes, which are secrecy objects, are taken out successively by each character unit and then, exclusive-OR operations are carried out to bits composing the plaintext code with bits composing the PN signal.

By employing the stream enciphering method, it is intended to prevent illegal access to information, thereby ensuring only proper access.

In the above described stream enciphering method, so-called diffusion method has been often used in which the relation of correspondence between data quantity of the plaintext code and data quantity of cryptographic code is one-to-multiple to intend to intensify encryption strength. However, in this approach for intensifying the encryption strength with diffusion, the data quantity of the cryptographic code is expanded by just diffusion magnification as compared to the data quantity of the plaintext code, so that an increase of communication load may be induced. Although the intensification of the encryption strength and suppression of the increase of communication load are in contradictory trade-off relation, development of the stream enciphering method capable of satisfying both the requirements under this relation has been demanded.

US 6 044 388 describes how pseudorandom numbers are generated in a cryptographic module in a cryptographically strong manner by combining a time-dependent value with a secret value and passing the result through a one-way hash function to generate a hash value from which a random number is generated. The secret value is continually updated whenever the cryptographic module is idle by a first feedback function that generates an updated secret value as a one-way function of the current secret value and the time-dependent value. In addition, the secret value is updated on the occurrence of a predetermined external event by a second feedback function that generates an updated secret value as a one-way function of the current secret value, the time-dependent value and an externally supplied value. Upon power-on reset, if the pseudorandom number generator has not been previously initialized, it initializes itself by resetting the time-dependent and secret values and requiring the second feedback function to perform a predetermined number of updates of the secret value in response to external events. Otherwise, the time-dependent and secret values are restored using values stored in backup registers. A hash of the current secret value that is different from either feedback function is used as a backup secret value to minimize the possibility that restoration will result in repetition of pseudorandom numbers.

US 5 060 265 discloses a method of protecting a pseudorandom (PN) signal generated by a linear Feedback Shift Register (LFSR) from cryptographic attack. This is accomplished by first receiving a PN output signal generated by an LFSR, or by clocking an LFSR to produce a PN output signal. Thereafter, non-linearity is deterministically introduced into the PN signal to produce a deterministic bit pattern. According to the suggested embodiments, the introduction of non-linearity is accomplished by altering at least one bit of the PN signal sequence. Next, the deterministic bit pattern is substituted in place of the LFSR PN signal, thereby protecting the PN signal from cryptographic attack.

SUMMARY OF THE INVENTION

The present invention has been achieved in views of the above described background art and an object of the present invention is to provide a stream enciphering method capable of satisfying both improvement of the encryption strength and suppression of the increase of communication load by employing a cycle contradictory to the basic processing unit of plaintext code as a cycle of the PN signal which takes an important role in the stream.enciphering method.

Another object of the present invention is to provide an optimum deciphering method for use in restoring the cryptographic code enciphered with the above described stream enciphering method to original plaintext code.

Still another object of the present invention is to provide a cryptographic communication system so constructed as to be capable of achieving cryptographic communication of information between a transmitter side and a receiver side by enciphering information with the above described stream enciphering method and restoring the cryptographic code to plaintext code with the above described deciphering method.

To achieve the above object, there is provided a stream enciphering method according to the appended Claim 1, a deciphering method according to the appended Claim 2, and a communication system according to the appended Claim 3.

The nature, principle and utility of the invention will become more apparent from the following detailed description when read in conjunction with the accompanying drawings.

BRIEF DESCRIPTION OF THE DRAWINGS

In the accompanying drawings:

Fig.1 is a function block diagram of a cryptographic communication system of the present invention;
Fig. 2 is a diagram for explaining an effect achieved by the stream enciphering method of the present invention; and
Fig.3 is a diagram for explaining an effect achieved by the stream enciphering method of the present invention.

DESCRIPTION OF THE PREFERRED EMBODIMENTS

According to an aspect of the present invention, there is provided a stream enciphering method for generating a cryptographic code by carrying out exclusive-OR operations between a plaintext code which is a secrecy object and a PN signal, wherein a cycle contradictory to the basic processing unit of said plaintext code is employed as a cycle of the PN signal.

According to the present invention, a cycle contradictory to the basic processing unit of the plaintext code is employed as a cycle of the PN signal. By employing such a structure, a code string composing the cryptographic code is mixed very well, thereby preventing an original text from being transparently seen through the cryptographic code.

According to the present invention, by technical approach for adjusting the cycle of the PN signal from viewpoints of ensuring non-affinity of the cycle of the PN signal with respect to the basic processing unit of the plaintext code, completely different from mere adjustment of cycle length, the original text is prevented from being transparently seen through the cryptographic code. Therefore, it is possible to provide a stream enciphering method capable of satisfying both improvement of the encryption strength and suppression of the increase of communication load.

Because the present invention is capable of improving the encryption strength to some extent independently, for example, if a relatively short cycle is employed for the PN signal, a possibility of direct enciphering with one-to-one correspondence between the data quantity of the plaintext code and that of cryptographic code without expanding the data quantity with diffusion is expanded so that an increase of communication load is suppressed. If a relatively long cycle is employed for the PN signal, an effect of improvement of the encryption strength thereby and an effect of the encryption strength by the present invention itself cooperates with each other so that a conspicuously excellent improvement of the encryption strength can be expected.

As described above, the stream enciphering method of the present invention has a feature in selection of the cycle of the PN signal. How the cryptographic code enciphered with this method is restored to an original plaintext code is an important problem.

According to another aspect of the present invention, there is provided a deciphering method for deciphering a cryptographic code to a plaintext code which is a secrecy object, the cryptographic code being enciphered by a stream enciphering method for generating the cryptographic code by carrying out exclusive-OR operations between the plaintext code and a PN signal having a cycle contradictory to a basic processing unit of the plaintext code, wherein the cryptographic code is restored to an original plaintext code by carrying out exclusive-OR operations by obtaining synchronism between the cryptographic code and a same PN signal as the aforementioned PN signal.

According to the present invention, exclusive-OR operations are carried out to the cryptographic code by obtaining synchronism with the same PN signal as the aforementioned PN signal so as to restore the cryptographic code to a plaintext code. More specifically, upon restoration of the cryptographic code, the exclusive-OR operations between the cryptographic code and the PN signal are carried out again by obtaining synchronism therebetween. If the PN signal is asynchronous with the cryptographic code, the cryptographic code is not restored to an original plaintext code properly but converted to just noise.

The present invention provides a procedure for restoring the cryptographic code enciphered with the stream enciphering method having a feature in selection of the cycle of the PN signal to the original plaintext code.

According to still another aspect of the present invention, there is provided a cryptographic communication system constituted so as to be capable of achieving cryptographic communication between a transmitter side and a receiver side, wherein the transmitter side comprises: a plaintext storage means for storing a plaintext code which is a secrecy object by each basic processing unit; a transmitter side PN signal storage means for storing a PN signal which has a contradictory cycle to the basic processing unit of the plaintext code; an enciphering means for generating a cryptographic code by carrying out exclusive-OR operations between the plaintext code stored in the plaintext storage means and the PN signal stored in the transmitter side PN signal storage means; and a transmitting means for transmitting the cryptographic code generated by the enciphering means to the receiver side, and the receiver side comprises: a receiving means for receiving the cryptographic code transmitted from the transmitting means; a cipher text storage means for storing the cryptographic code received by the receiving means by each basic processing unit; a receiver side PN signal storage means for storing a same PN signal as the PN signal stored in the transmitter side PN signal storage means; and a deciphering means for deciphering the cryptographic code to an original plaintext code by carrying out exclusive-OR operations by obtaining synchronism between the cryptographic code stored in the cipher text storage means and the PN signal stored in the receiver side PN signal storage means.

In the cryptographic communication system of the present invention, on the transmitter side, the enciphering means generates a cryptographic code by carrying out exclusive-OR operations between the plaintext code stored in the plaintext storage means and the PN signal stored in the transmitter side PN signal storage means. Then, the transmitting means transmits the cryptographic code generated by the enciphering means to the receiver side. On the other hand, on the receiver side, the receiving means receives the cryptographic code transmitted by the transmitting means. Then the cipher text storage means stores the cryptographic code received by the receiving means by each basic processing unit. The deciphering means deciphers the cryptographic code to an original plaintext code by carrying out exclusive-OR operations by obtaining synchronism between the cryptographic code stored in the cipher text storage means and the PN signal stored in the receiver side PN signal storage means, which is the same PN signal as the PN signal in the transmitter side PN signal storage means.

According to the present invention, the transmitter side transmits the cryptographic code enciphered with the stream enciphering method having a feature in selection of the cycle of the PN signal while the receiver side restores the cryptographic code enciphered according to the above described procedure to an original plaintext by carrying out exclusive-OR operations again. Consequently, the code string composing the cryptographic code is mixed very well. As a result, it is possible to obtain a cryptographic communication system capable of satisfying demands for improvement of the encryption strength and suppression of an increase of communication load.

Hereinafter, the preferred embodiments of the stream enciphering method, deciphering method and cryptographic communication system of the present invention will be described in detail with reference to the accompanying drawings.

In the stream enciphering method, PN signal is an enciphering key. Generally, as the number of the enciphering key types increases , in other words, the length of the PN signal cycle or bit length increases, robustness of system is improved. However, considering control on enciphering key and convenience for verification for preventing illegal access, a too long PN signal is difficult to handle. Then, if an original text can be prevented from being transparently seen by a technical approach from a viewpoint different from mere adjustment of the length of the PN signal cycle, an object of the present invention can be achieved. Its answer is to employ a cycle not coinciding with the basic processing unit of plaintext code as the cycle of the PN signal. More specifically, assuming that the basic processing unit of the plaintext code is 8 bits (even number), 23 bits (odd number) is used as the cycle of the PN signal not coinciding with this 8 bits (even number). In this case, 8-bit and 23-bit are not capable of obtaining synchronism until 184-bit cycle is reached, which is a least common multiple of $8 \times 23$ calculated from a place on time axis in which mutual head bits are synchronous with each other. The cycle of a combination of the basic processing unit of plaintext code with the cycle of the PN signal, which is relatively long so as to obtain mutual synchronism, is called contradictory cycle. By carrying out this device, a code string composing a cryptographic code is mixed very well, so that it is possible to efficiently prevent original text of characters and numerals from being transparently seen through the cryptographic code.

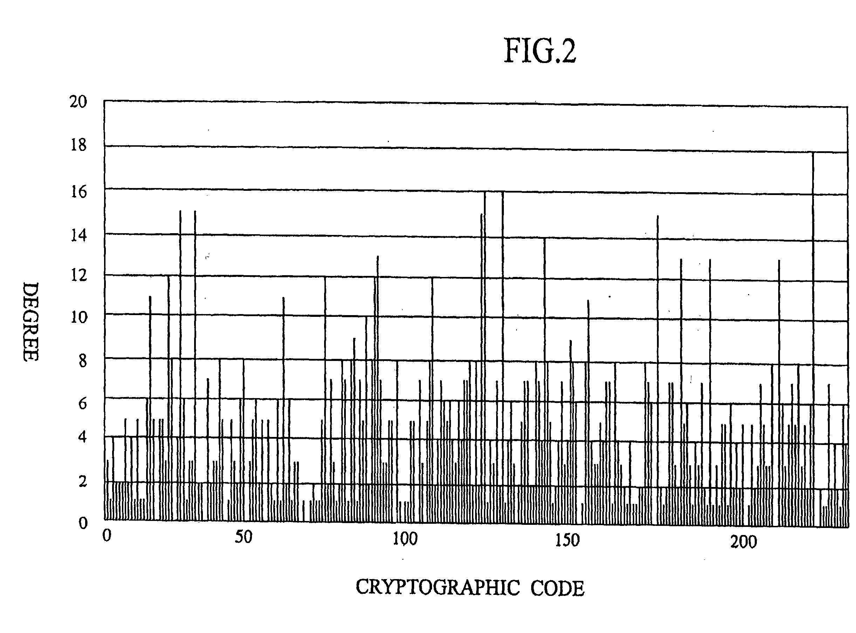

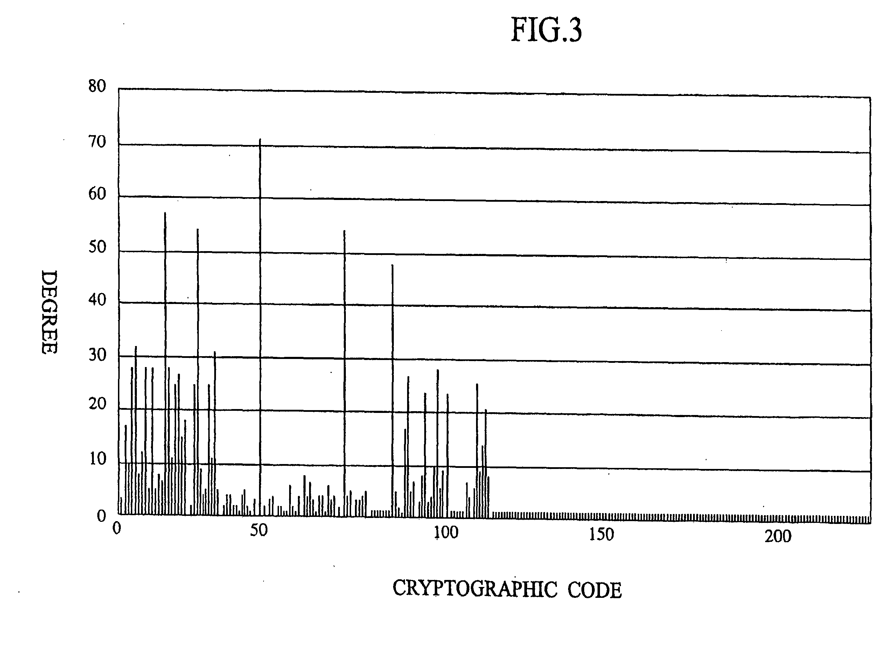

Figs.2 and 3 are diagrams for explaining improvement of encryption strength achieved by the stream enciphering method of the present invention.

For example, ASCII code, which is one of character system for expressing characters and numerals, can express 128 characters including 96 7-bit capital/small alphabetic letters, numerals and special letters and 32 control characters. In this case, the head bit of 8 bits (1 byte) which is the basic processing unit of information for today's digital computer is always 0. Thus, in distribution of appearance frequency of the ASCII code, the characters thereof are distributed only in front half portion (0-127) of 8-bit (0-255) while no characters are distributed in the remaining latter half portion (128-255).

Fig.3 shows a distribution of appearance frequency of cryptographic code produced by stream-enciphering an alphabetic file expressed by ASCII code with one-to-one correspondence between plaintext code and cryptographic code by using 24 bits as the cycle of the PN signal in which the first bit, the ninth bit and the seventeenth bit always take 0. This distribution is deviated to left half. Although the left half is mixed quite well, the third party can estimate that its original text is expressed in English easily.

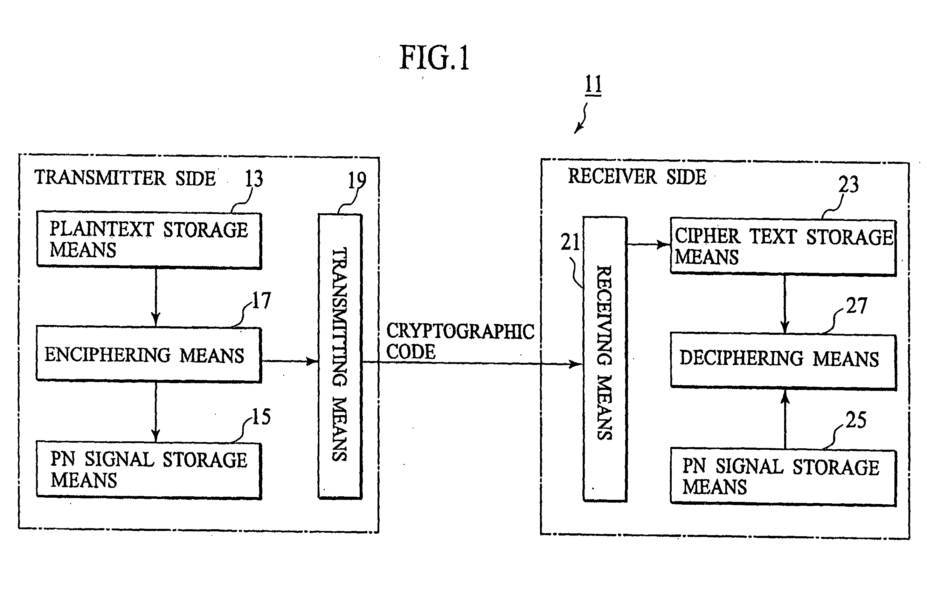

Fig.2 shows a distribution of appearance frequency of cryptographic code produced by stream-enciphering an alphabetic file expressed by ASCII code with one-to-one correspondence between plaintext code and cryptographic code like Fig. 1, by using 23 bits as the cycle of the PN signal in which the first bit, the ninth bit and the seventeenth bit always take 0. The cryptographic code is diffused and mixed throughout entire 8 bits (0-255). Consequently, it is impossible for the third party to estimate whether the original text is alphabetic, Japanese or numeral data from the distribution of appearance frequency of the cryptographic code.

In the meantime, a comparison of combination of bit lengths L = {23, 24} of the PN signal cycle is only an example. That is, in comparative experiment about the combinations of bit lengths L = {7, 8}, {15, 16}, {63, 64} also, there is a conspicuous difference in the mixing effect of the cryptographic code.

Although the bit length L = 23 bits of the PN signal cycle is different from the L = 24 bits only by 1 bit in terms of the bit length, there is a conspicuous difference from viewpoints of robustness of the cryptographic code as evident from comparison between Fig.2 and Fig.3.

Fig.1 is a block diagram showing the structure of an embodiment of the cryptographic communication system of the present invention.

In the same Figure, the cryptographic communication system 11 is so constructed as to be capable of carrying out cryptographic communication of information between a transmitter side and a receiver side.

The transmitter side comprises a plaintext storage means 13 for storing a plaintext which is a secrecy object by each basic processing unit, a transmitter side PN signal storage means 15 for storing the PN signal which has a contradictory cycle to the basic processing unit of the plaintext code, an enciphering means 17 for generating cryptographic code by carrying out exclusive-OR operations to the plaintext code stored in the plaintext storage means 13 with the PN signal stored in the transmitter side PN signal storage means 15 and a transmitting means 19 for transmitting the cryptographic code generated by the enciphering means 17 to the receiver side.

On the other hand, the receiver side comprises a receiving means 21 for receiving the cryptographic code transmitted from the transmitting means 19, a cipher text storage means 23 for storing the cryptographic code by each basic processing unit received by the receiving means 21, a receiver side PN signal storage means 25 for storing the same PN signal as the PN signal stored in the transmitter side PN signal storage means 15, and a deciphering means 27 for deciphering the cryptographic code to original plaintext code by carrying out exclusive-OR operations by obtaining synchronism between the cryptographic code stored in the cipher text storage means 23 and the PN signal stored in the receiver side PN signal storage means 25.

With such a structure, on the transmitter side, the enciphering means 17 carries out exclusive-OR operations between the plaintext code stored in the plaintext storage means 13 and the PN signal stored in the transmitter side PN signal storage means 15 so as to generate the cryptographic code. After receiving this cryptographic code, the transmitting means 19 transmits the cryptographic code generated by the enciphering means 17 to the receiving side. On the other hand, the receiving means 21 receives the cryptographic code transmitted from the transmitting means 19. After receiving this cryptographic code, the cipher text storage means 23 stores the cryptographic code by each basic processing unit received by the receiving means 21. The deciphering means 27 carries out exclusive-OR operations by obtaining synchronism between the cryptographic code stored in the cipher test storage means 23 and the same PN signal as the PN signal in the transmitter side PN signal storage means 15, stored in the receiving side PN signal storage means 25 so as to restore the cryptographic code to plaintext code.

As the PN signal which takes an important role in enciphering, it is possible to generate a binary code string using a conventionally well known pseudorandom number generation method and employ a signal string obtained by cutting out a predetermined bit length suitable for achieving a predetermined object of the present invention from the generated binary code string. The PN signal is not limited to the above described example, but it is possible to cut out a code string of an appropriate bit length, from a binary code string obtained by two-level-encoding, through a 1-bit quantizer (AD converter), an output of a flip-flop loop through a CMOS switch in a one-dimensional mapping circuit for generating chaos, thereby to use the code string as the PN signal. Further, a chaos string starting from an initial value may be used as the cycle signal of the PN signal as it is. Further, it is permissible to have an industrial general-purpose CPU or general-purpose digital computer calculate the following equations.

Logistic mapping function:       $x(t+1)=4x(t)\{1-x(t)\}$,

Feedback:       $x(t) = x(t+1)$,

Isomorphic conversion and quantization:

$$y(t) = [2/\pi \cdot \arcsin \sqrt{x(t)} \cdot 2^n] = [2x(t)]'$$

(when n = 1, [] is an operator representing a round-off operation of a decimal fraction of a value in the [])

Then, a code string having an appropriate bit length from the obtained binary code string can be employed as the PN signal.

As described above, it should be noted that employing the PN signal whose cycle is based on a bit length contradictory to the basic processing unit of information generally using 8-bit length will improve the social security in information communication and information storage tremendously.

The above described embodiment is just an example facilitating understanding of the present invention, but does not restrict the technical scope of the invention. Therefore, naturally the present invention includes not only all embodiments belonging to its technical scope but also all equivalents.

That is, although in this embodiment, ASCII code is exemplified as code system of plaintext code, the present invention is not restricted to this embodiment, but it is needless to say that code system including ISO code, EBCDI code, JIS code or Japanese Kanji character JIS code may be employed appropriately.

More generally, it should be understood that many modifications and adaptations of the invention will become apparent to those skilled in the art and it is intended to encompass such obvious modifications and changes

## Claims

1. A stream enciphering method for generating a cryptographic code by carrying out exclusive-OR operations between a plaintext code which is a secrecy object and a PN signal, **characterized in that** said PN signal is formed such that the least common multiple of the bit length L; wherein L is 7 or 15 or 23 or 63; of a PN signal cycle and the basic processing unit, bit length, which is a multiple of 8, of said plaintext code does not coincide with the basic processing unit of the plaintext code.

2. A deciphering method for deciphering a cryptographic code to a plaintext code which is a secrecy object, the cryptographic code being enciphered by a stream enciphering method for generating the cryptographic code by carrying out exclusive-OR operations between the plaintext code and a PN signal, **characterized in that** said PN signal is formed such that the least common multiple of the bit length L; wherein L is 7 or 15 or 23 or 63; of a PN signal cycle and the basic processing unit, bit length, which is a multiple of 8, of said plaintext code does not coincide with the basic processing unit of the plaintext code, wherein said cryptographic code is restored to an original plaintext code by carrying out exclusive-OR operations by obtaining synchronism between said cryptographic code and a same PN signal as said PN signal.

3. A cryptographic communication system (11) constituted so as to be capable of achieving cryptographic communication between a transmitter side and a receiver side, **characterized in that**:

    said transmitter side comprises:

a plaintext storage means (13) for storing a plaintext code which is a secrecy object by each basic processing unit;
a transmitter side PN signal storage means (15) for storing a PN signal which is formed such that the least common multiple of the bit length L; wherein L is 7 or 15 or 23 or 63; of a PN signal cycle and the basic processing unit bit length, which is a multiple of 8, of said plaintext code does not coincide with the basic processing unit of the plaintext code;
an enciphering means (17) for generating a cryptographic code by carrying out exclusive-OR operations between the plaintext code stored in said plaintext storage means (13) and the PN signal stored in said transmitter side PN signal storage means (15); and
a transmitting means (19) for transmitting the cryptographic code generated by said enciphering means (17) to the receiver side, and

    said receiver side comprises:

a receiving means (21) for receiving the cryptographic code transmitted from said transmitting means (19);
a cipher text storage means (23) for storing the cryptographic code received by said receiving means (21) by each basic processing unit;
a receiver side PN signal storage means (25) for storing a same PN signal as the PN signal stored in said transmitter side PN signal storage means (15); and
a deciphering means (27) for deciphering the cryptographic code to an original plaintext code by carrying out exclusive-OR operations by obtaining synchronism between the cryptographic code stored in said cipher text storage means (23) and the PN signal stored in said receiver side PN signal storage means (25).

## Patentansprüche

1. Stromverschlüsselungsverfahren zum Erzeugen eines kryptographischen Codes durch Ausführen von Exklusiv-ODER-Operationen zwischen einem Klartextcode, der ein geheimes Objekt ist, und einem PN-Signal, **dadurch gekennzeichnet, dass** das PN-Signal so gebildet wird, dass das kleinste gemeinsame Vielfache der Bitlänge L; wobei L 7 oder 15 oder 23 oder 63 ist; eines PN-Signalzyklus und der Basisverarbeitungseinheit des Klartextcodes nicht mit der Basisverarbeitungseinheit des Klartextcodes koinzidiert.

2. Entschlüsselungsverfahren zum Entschüsseln eines kryptographischen Codes in einen Klartextcode, der ein Geheimobjekt ist, wobei der kryptographische Code durch ein Stromverschlüsselungsverfahren zum Erzeugen des kryptographischen Codes durch Ausführen von Exklusiv-ODER-Operationen zwischen dem Klartextcode und einem PN-Signal verschlüsselt wird, **dadurch gekennzeichnet, dass** das PN-Signal so ausgebildet wird, dass das kleinste gemeinsame Vielfache der Bitlänge L; wobei L 7 oder 15 oder 23 oder 63 ist; eines PN-Signalzyklus und der Basisverarbeitungseinheit des Klartextcodes nicht mit der Basisverarbeitungseinheit des Klartextcodes koinzidiert, wobei der kryptographische Code durch Wiederausführen von Exklusiv-ODER-Operationen zu einem Originalklartextcode wiederhergestellt wird, indem Synchronismus zwischen dem kryptographischen Code und einem selben PN-Signal als das PN-Signal erhalten wird.

3. Kryptographisches Kommunikationssystem (11), das so aufgebaut ist, dass es in der Lage ist, eine kryptographische Kommunikation zwischen einer Senderseite und einer Empfängerseite zu erzielen, **dadurch gekennzeichnet, dass**:

die Senderseite umfasst:

ein Klartextspeichermittel (13) zum Speichern eines Klartextcodes, der ein Geheimobjekt ist, durch jede Basisverarbeitungseinheit;

ein senderseitiges PN-Signalspeichermittel (15) zum Speichern eines PN-Signals, das so ausgebildet wird, dass das kleinste gemeinsame Vielfache der Bitlänge L; wobei L 7 oder 15 oder 23 oder 63 ist; eines PN-Signalzyklus und der Basisverarbeitungseinheit des Klartextcodes nicht mit der Basisverarbeitungseinheit des Klartextcodes koinzidiert;

ein Verschlüsselungsmittel (17) zum Erzeugen eines kryptographischen Codes durch Ausführen von Exklusiv-ODER-Operationen zwischen dem in dem Klartextspeichermittel (13) gespeicherten Klartextcode und dem in dem senderseitigen PN-Signalspeichermittel (15) gespeicherten PN-Signal; und

ein Sendermittel (19) zum Übertragen des durch das Verschlüsselungsmittel (17) erzeugten kryptographischen Codes an die Empfängerseite, und die Empfängerseite umfasst:

ein Empfangsmittel (21) zum Empfangen des von dem Sendermittel (19) übertragenen kryptographischen Codes; ein Chiffriertextspeichermittel (23) zum Speichern des von dem Empfangsmittel (21) durch jede Basisverarbeitungseinheit empfangenen kryptographischen Codes;
ein empfängerseitiges PN-Signalspeichermittel (25) zum Speichern eines selben PN-Signals wie das im senderseitigen PN-Signalspeichermittel (15) gespeicherte PN-Signal; und
ein Entschlüsselungsmittel (27) zum Entschüsseln des kryptographischen Codes zu seinem Originalklartextcode durch Ausführen von Exklusiv-ODER-Operationen durch Erhalten von Synchronismus zwischen dem in dem Schlüsseltextspeichermittel (23) gespeicherten kryptographischen Code und dem in dem empfängerseitigen PN-Signalspeichermittel gespeicherten PN-Signal.

## Revendications

1. Procédé de chiffrage d'un flux de données, destiné à générer un code cryptographique en menant des opérations ou exclusives entre un code de texte en clair qui est un objet de secret et un signal PN, **caractérisé en ce que** ledit signal PN est formé comme étant le plus petit multiple commun de la longueur L des éléments binaires ; dans lequel L a pour valeur 7 ou 15 ou 23 ou 63 ; d'un cycle de signaux PN et la longueur des éléments binaires de l'unité fondamentale de traitement qui est un multiple de 8 dudit code de texte en clair ne coïncide pas avec l'unité fondamentale de traitement du code de texte en clair.

2. Procédé de déchiffrage destiné à déchiffrer un code cryptographique en un code de texte en clair qui est un objet de secret, le code cryptographique étant chiffré par un procédé de chiffrage de flux de données destiné à générer un code cryptographique en menant des opérations OU exclusives entre un code de texte en clair qui est un objet de secret et un signal PN, **caractérisé en ce que** ledit signal PN est formé comme étant le plus petit multiple commun de la longueur L des éléments binaires ; dans lequel L a pour valeur 7 ou 15 ou 23 ou 63 ; d'un cycle de signaux PN et la longueur des éléments binaires de l'unité fondamentale de traitement qui est un multiple de 8 dudit code de texte en clair ne coïncide pas avec l'unité fondamentale de traitement du code de texte en clair, dans lequel

ledit code cryptographique est restauré en un code de texte en clair d'origine en menant des opérations OU exclusives, en obtenant un synchronisme entre ledit code cryptographique et un même signal PN que ledit signal PN.

3. Système ce communication cryptographique (11) constitué de manière à être capable d'établir des communications cryptographiques entre un côté émetteur et un côté récepteur, **caractérisé en ce que** :

ledit côté émetteur comprend :

un moyen (13) de mémorisation de texte en clair destiné à mémoriser un texte en clair qui est un objet de secret au moyen de chaque unité fondamentale de traitement ;

un moyen (15) de mémorisation de signal PN de côté émetteur destiné à mémoriser un signal PN qui est formé comme étant le plus petit multiple commun de la longueur L des éléments binaires ; dans lequel L a pour valeur 7 ou 15 ou 23 ou 63 ; d'un cycle de signaux PN et la longueur des éléments binaires de l'unité fondamentale de traitement qui est un multiple de 8 dudit code de texte en clair ne coïncide pas avec l'unité fondamentale de traitement du code de texte en clair ;

un moyen de chiffrage (17) destiné à générer un code cryptographique en menant des opérations OU exclusives entre le code de texte en clair mémorisé dans ledit moyen (13) de mémorisation de texte en clair et le signal PN mémorisé dans ledit moyen (15) de mémorisation de signal PN du côté émetteur ; et

un moyen d'émission (19) destiné à émettre le code cryptographique généré par ledit moyen de chiffrage (17) vers le côté récepteur, et

ledit côté récepteur comprend :

un moyen de réception (21) destiné à recevoir le code cryptographique émis par ledit moyen d'émission (19) ;

un moyen (23) de mémorisation de texte chiffré destiné à mémoriser le code cryptographique reçu par ledit moyen de réception (21) au moyen de chaque unité fondamentale de traitement ;

un moyen (25) de mémorisation de signal PN du côté récepteur destiné à mémoriser un même signal PN que le signal PN mémorisé dans ledit moyen (15) de mémorisation de signal PN du côté émetteur ; et

un moyen de déchiffrage (27) destiné à déchiffrer le code cryptographique en code de texte en clair d'origine en menant des opérations OU exclusives, en obtenant un synchronisme entre le code cryptographique mémorisé dans ledit moyen (23) de mémorisation de texte chiffré et le signal PN mémorisé dans ledit moyen (25) de mémorisation de signal PN du côté récepteur.

# FIG.1

EP 1 143 657 B1

## FIG.2

DEGREE

CRYPTOGRAPHIC CODE

EP 1 143 657 B1

# FIG.3